# EUROPÄISCHE PATENTANMELDUNG

(11) **EP 2 642 323 A2**
(43) Veröffentlichungstag der Anmeldung: **25.09.2013**
(21) Anmeldenummer: 13000542.4
(22) Anmeldetag: 02.02.2013
(51) Int. Cl.: G02B 6/44

(54) **Glasfaser-Netzverteiler mit Führungselementen für Glasfaserkabel**

(30) Priorität: 22.03.2012 DE 102012005821
(71) Anmelder: Langmatz GmbH, 82467 Garmisch-Partenkirchen (DE)
(72) Erfinder: Schuster, Axel, 82467 Garmisch-Partenkirchen (DE); Bruweleit, Stefan, 82377 Penzberg (DE)
(74) Vertreter: Flosdorff, Jürgen

(57) **Zusammenfassung**

Der Glasfaser-Netzverteiler mit einem Gehäuse, in dem Glasfaserkabel von einem Eingangsbereich (10) zu Spleißstellen verlegt sind, ist dadurch gekennzeichnet, dass die Glasfaserkabel zwischen dem Eingangsbereich und den Spleißstellen entlang jeweils wenigstens einer gebogenen Bahn jeweils in wenigstens ein Führungselement (5) eingelegt sind, das aus einem elastischen Material besteht und so verformbar ist, dass die Glasfaserkabel bei Auftreten einer Zugkraft aus dem Führungselement austreten können, z. Bsp. in Richtung 11 durch die elastischen Arme des Führungslementes.

## Beschreibung

Die Erfindung betrifft einen Glasfaser-Netzverteiler mit einem Gehäuse, in dem Glasfaserkabel von einem Eingangsbereich des Gehäuses zu Spleißstellen in dem Gehäuse verlegt sind. Außerdem betrifft die Erfindung Führungselemente für die Glasfaserkabel.

Glasfaser-Netzverteiler haben meist die Form eines Schranks, der an der Vorderseite durch eine schwenkbare Tür verschließbar ist. An der Unterseite des Schranks befindet sich der Eingangsbereich für die Glasfaserkabel, die bei Einwirkung von Kräften sehr empfindlich sind, weshalb sie üblicherweise in kleine aus Kunststoff bestehende Schutzröhrchen, sogenannte Speed-Pipes oder Speed-Net-Röhrchen aufgenommen sind. Diese Schutzröhrchen werden in Bündeln im Erdreich zur Unterseite des Gehäuses des Glasfaser-Netzverteilers geführt, wobei sie in größere Erdrohre aufgenommen sein können, was aber nicht immer der Fall ist. Die Schutzröhrchen werden bis zu dem Eingangsbereich des Gehäuses geführt und dort mit einem Gasstopp versehen. Die Glasfaserkabel werden von dort zu Spleißstellen geführt und an diesen befestigt, von wo die Glasfasern zu den jeweiligen Kunden weitergeführt werden.

Bei Erdarbeiten kommt es vor, dass ein Bagger versehentlich ein Erdrohr mit darin befindlichen Glasfaserkabeln oder ein Schutzrohrbündel ergreift und dabei eine solche Zugkraft auf die Glasfaserkabel ausübt, dass diese in einem Netzverteilergehäuse z.B. an den Spleißstellen abgerissen werden. Auf die Glasfaserkabel können dabei auch solche Biegekräfte ausgeübt werden, die die empfindlichen Glasfasern beschädigen oder gar zerbrechen. Dies kann zunächst unentdeckt bleiben, wenn die ausgeübte Zugkraft nicht so groß war, dass die Glasfaserkabel aus ihrer Befestigung heraus gerissen werden.

Der vorliegenden Erfindung liegt die Aufgabe zugrunde, für dieses Problem eine Lösung anzugeben. Dabei soll die Gefahr eines Abreißens oder Herausreißens von Glasfaserkabeln aus ihrer Fixierung in dem Netzverteiler verringert werden, und es soll für einen Monteur, der Arbeiten dem Netzverteiler ausübt, erkennbar sein, dass auf die Glasfaserkabel insbesondere durch Erdarbeiten Kräfte eingewirkt haben, die zu deren Beschädigung geführt haben können.

Diese Aufgabe wird erfindungsgemäß durch die Merkmale des Patentanspruchs 1 gelöst. Das dabei vorgesehene Führungselement ist in dem unabhängigen Anspruch 9 gekennzeichnet.

Die Erfindung sieht vor, dass die Glasfaserkabel in dem Netzverteilerschrank bzw. -gehäuse zwischen ihrem Eingangsbereich und den Spleißstellen, an denen sie fest angebracht sind, entlang jeweils wenigstens einer gebogenen Bahn jeweils in wenigstens ein Führungselement eingelegt sind, das aus einem elastischen Material besteht und so verformbar ist, dass die Glasfaserkabel bei Auftreten einer signifikanten Zugkraft aus dem Führungselement austreten können. Dabei sind die Glasfaserkabel im Bereich der wenigstens einen gebogenen Bahn mit einer gewissen Überlänge verlegt, so dass sie bei Auftreten einer genügend großen Zugkraft, die eine Beschädigung oder ein Herausreißen zur Folge haben könnte, seitlich in den durch die gebogene Bahn gebildeten Freiraum eintreten, d.h. ausweichen können, so dass sie ein Stück aus dem Eingangsbereich des Gehäuses heraus gezogen werden können, ohne von ihrer Befestigungsstelle abgerissen zu werden.

Außerdem sieht ein Monteur nach Öffnen des Netzverteilerschranks sofort, dass Zug- und evtl. Biegekräfte auf die Glasfaserkabel ausgeübt worden sind, wenn diese aus den Führungselementen ausgetreten sind, so dass eine Überprüfung eingeleitet werden kann, ob Glasfasern beschädigt worden sind.

Dabei können die Glasfaserkabel in dem Netzverteilerschrank auch an zwei oder mehr gebogenen Bahnen, die die beschriebenen seitlichen Ausweichmöglichkeiten bieten, vorgesehen sein.

Diese gebogene Bahn oder gebogenen Bahnen sollten bevorzugt durch wenigstens drei in Längsrichtung der Glasfaserkabel beabstandete Führungselemente gebildet sein, die so angeordnet sind, dass die durch sie gebildete gebogene Bahn einen vorgegebenen Mindestradius nicht unterschreitet, der sicherstellt, dass die Glasfaserkabel nicht einer unzulässigen Knickbelastung ausgesetzt sind. Alternativ könnte die gebogene Bahn aber auch über nur ein elastisches Führungselement verlaufen, wenn der zugehörige gebogene Abschnitt durch einen starren Rohrabschnitt vorgegeben ist, der das Glasfaserkabel im Bereich der gebogenen Bahn umgibt. Einfacher dürfte es sein, die erwähnten drei oder mehr Führungselemente anzuordnen, die zweckmäßigerweise mit einer Wand des Glasfaser-Netzverteilers verschraubt oder vernietet sind.

In einer bevorzugten Ausgestaltung der Erfindung hat jedes Führungselement im wesentlichen die Form eines offenen Rings, der bevorzugt eine ovale Form haben kann. Die beiden Enden des offenen Rings sollten sich dabei überlappen. Dabei kann vorgesehen sein, dass sich die gebogenen Enden radial überlappen. Sie können aber auch seitlich nebeneinander liegen. Ein offener Spalt zwischen den sich überlappenden Enden erleichtert das Einlegen der Glasfaserkabel.

Die Führungselement bestehen zweckmäßigerweise aus einem Kunststoff, wobei LD-PE bevorzugt ist, ohne dass die Erfindung hierauf beschränkt ist.

Mit der vorliegenden Erfindung kann in vielen Fällen eine Beschädigung von Glasfaserkabeln in einem Netzverteilerschrank verhindert werden, wenn bei Erdarbeiten versehentlich mechanische Kräfte auf die Glasfasern einwirken. Ein derartiger Eingriff wird zudem in dem Netzverteilerschrank sichtbar, so dass eine Überprüfung der Funktionsfähigkeit der Glasfasern veranlasst werden kann. Dies wird mit einfachen und kostengünstigen Mitteln erreicht, nämlich mit elastischen Führungselementen, aus denen die Glasfaserkabel bei Einwirkung entsprechend großer Zugkräfte austreten können, wobei für die Glasfaserkabel seitliche Ausweichmöglichkeiten in dem Netzverteilerschrank geschaffen werden.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Aufsicht auf ein Führungselement;
- Figur 2: eine Stirnansicht auf an einer Rückwand eines Glasfaser-Netzverteilergehäuses befestigte Führungselemente, in die zwei von zahlreichen Gruppen von Glasfaserkabeln eingelegt sind, und
- Figur 3: eine perspektivische Darstellung der Anordnung gemäß Figur 2.

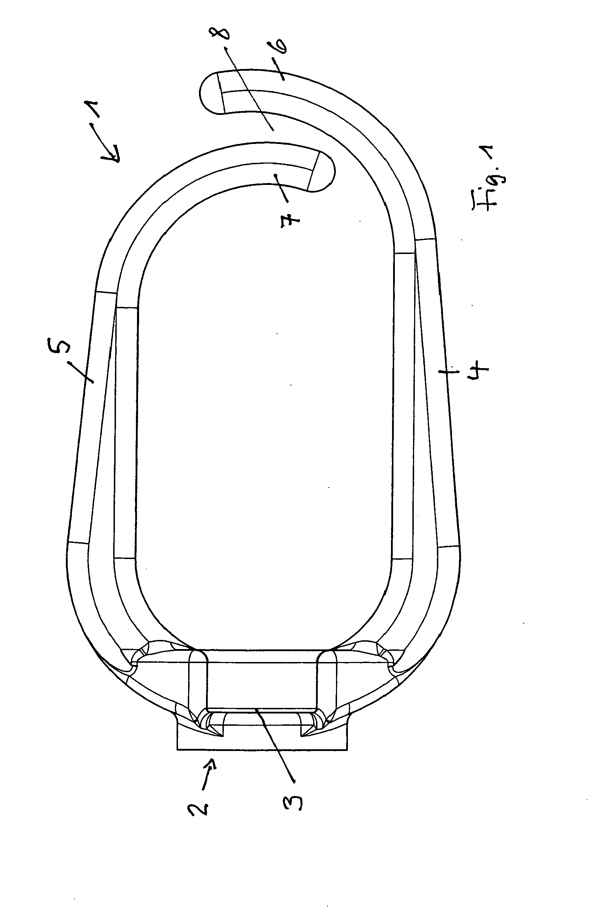

Das in Figur 1 dargestellte Führungselement 1 hat im wesentlichen die Form eines offenen ovalen Rings. Von einem Basisabschnitt 2, der für ein Befestigungsmittel wie eine Schraube oder einen Niet ein Durchgangsloch 3 hat, erstrecken sich zwei elastische Arme 4, 5, deren gebogene Enden 6 und 7 sich radial um eine Strecke überdecken. Zwischen den Enden 6 und 7 verbleibt ein Spalt 8, der das Einlegen von Glasfaserkabeln 9 erleichtert. Die Glasfaserkabel 9 werden von unten durch einen insgesamt mit dem Bezugszeichen 10 angedeuteten Eingangsbereich eines nicht näher dargestellten Netzverteilerschranks in dessen Innenraum eingeführt. Schutzröhrchen 12 der Glasfaserkabel 9 sind an ihren Enden mit einem Gasstopp 13 versehen. An der Rückwand des Netzverteilerschranks sind die Führungselemente 1 angeschraubt oder angenietet. Die Führungselemente 1 sind so positioniert, dass die eingelegten Glasfaserkabel 9 einem Bogen von etwa 90° folgen, und zwar mit einem solchen Radius, dass die Glasfasern durch diese Biegung nicht beschädigt werden können. Die Glasfaserkabel 9 werden in dem Netzverteilerschrank zu nicht dargestellten Spleißstellen weitergeführt.

Wenn auf die Glasfaserkabel 9 nach unten gerichtete Zugkräfte einwirken, drücken die Glasfaserkabel 9 gegen die Arme 5, da die Glasfaserkabel 9 in ihrem weiteren Verlauf (hinter den Führungselementen 1) fixiert sind, wodurch die elastischen Arme 5 aufgebogen werden, bis die Glasfaserkabel 9 in Richtung des Pfeils 11 aus den drei Führungselementen austreten.

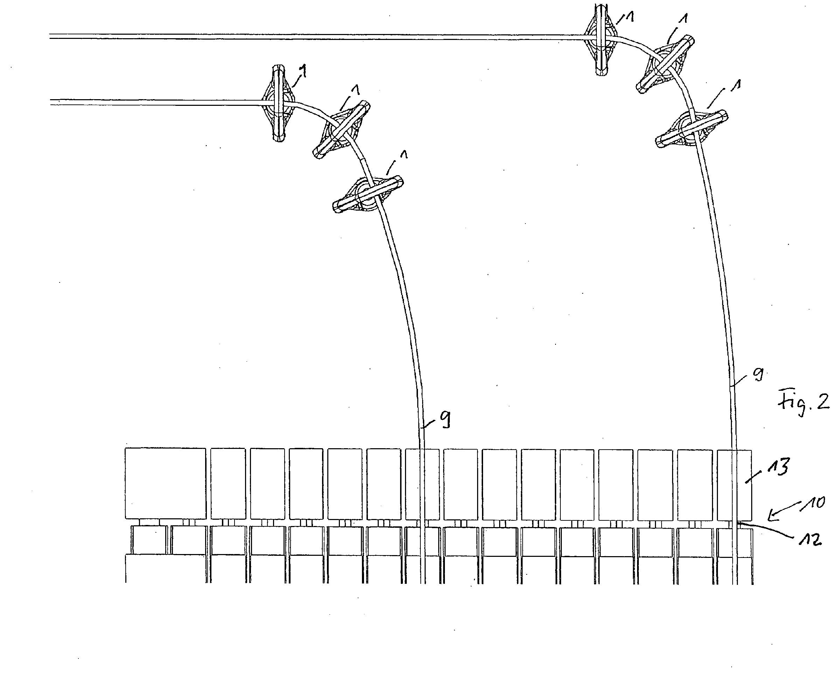

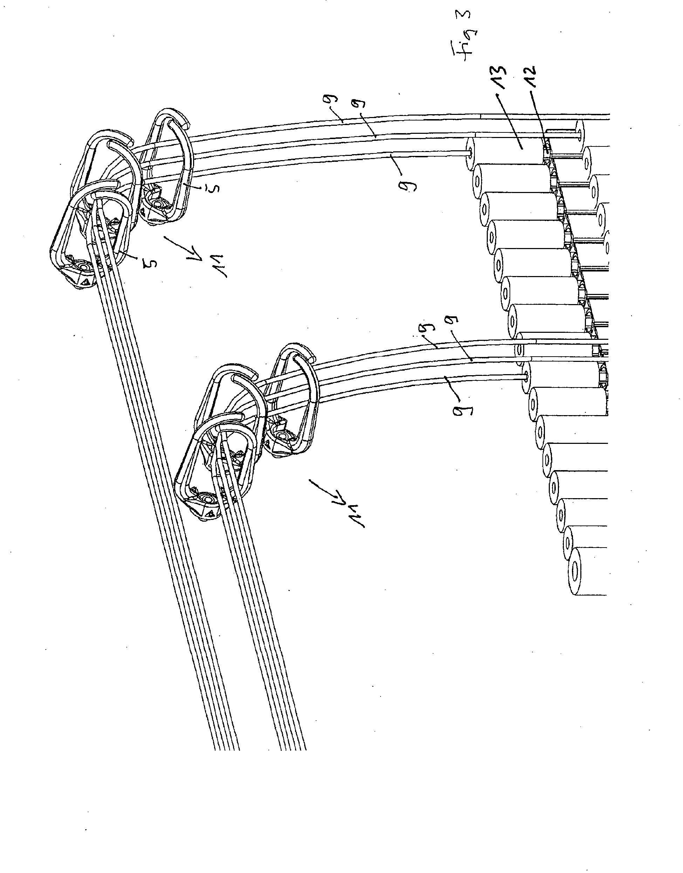

Obwohl in den Figuren 2 und 3 nur zwei Stränge von Glasfaserkabeln 9 dargestellt sind, versteht es sich, dass eine Vielzahl von Glasfaserkabeln in den Eingangsbereich 10 eingeführt sind, die jeweils eine seitliche Ausweichmöglichkeit haben.

Es wird betont, dass die Erfindung nicht auf die beschriebenen und dargestellten Ausführungsformen beschränkt ist. Vielmehr sind alle offenbarten Merkmale der Ausführungsformen auch einzeln untereinander anders als oben beschrieben miteinander kombinierbar.

## Patentansprüche

1. Glasfaser-Netzverteiler mit einem Gehäuse, in dem Glasfaserkabel von einem Eingangsbereich zu Spleißstellen verlegt sind,
**dadurch gekennzeichnet,**
**dass** die Glasfaserkabel (9) zwischen dem Eingangsbereich (10) und den Spleißstellen entlang jeweils wenigstens einer gebogenen Bahn jeweils in wenigstens ein Führungselement (1) eingelegt sind, das aus einem elastischen Material besteht und so verformbar ist, dass die Glasfaserkabel (9) bei Auftreten einer Zugkraft (1) aus dem Führungselement austreten können.

2. Glasfaser-Netzverteiler nach Anspruch 1,
**dadurch gekennzeichnet,**
**dass** die wenigstens eine gebogene Bahn durch wenigstens drei in Längsrichtung der Glasfaserkabel beabstandete Führungselemente (1) gebildet ist, derart, dass die gebogene Bahn einen vorgegebenen Mindestradius nicht unterschreitet.

3. Glasfaser-Netzverteiler nach Anspruch 2,
**dadurch gekennzeichnet,**
**dass** die Führungselemente (1) mit einer Rückwand des Glasfaser-Netzverteilers verschraubt oder vernietet sind.

4. Glasfaser-Netzverteiler nach den Ansprüchen 1 bis 3,
**dadurch gekennzeichnet,**
**dass** jedes Führungselement (1) im wesentlichen die Form eines offenen Rings hat.

5. Glasfaser-Netzverteiler nach Anspruch 4,
**dadurch gekennzeichnet,**
**dass** sich die beiden Enden (6,7) des offenen Rings überlappen.

6. Glasfaser-Netzverteiler nach den Ansprüchen 4 oder 5,
**dadurch gekennzeichnet,**
**dass** der Ring im wesentlichen eine ovale Form hat mit gebogenen Enden (6,7), zwischen denen ein offener Spalt (8) verbleibt.

7. Glasfaser-Netzverteiler nach den Ansprüchen 4 bis 6,
**dadurch gekennzeichnet,**
**dass** sich die Enden (6,7) radial überlappen.

8. Glasfaser-Netzverteiler nach den Ansprüchen 1 bis 7,
**dadurch gekennzeichnet,**
**dass** jedes Führungselement (1) aus einem Kunststoff wie LD-PE besteht.

9. Führungselement für Glasfaserkabel,
**dadurch gekennzeichnet,**
**dass** das Führungselement (1) im wesentlichen die Form eines offenen Rings hat und aus einem elastischen Kunststoff besteht.
